# EUROPÄISCHE PATENTSCHRIFT

(11) **EP 2 010 800 B1**
(45) Veröffentlichungstag und Bekanntmachung des Hinweises auf die Patenterteilung: **27.07.2011**
(21) Anmeldenummer: 07722232.1
(22) Anmeldetag: 17.04.2007
(51) Int. Cl.: F16G 13/16

(54) **ENERGIEFÜHRUNGSKETTE**
ENERGY CONDUCTION CHAIN
CHAINE D'ACHEMINEMENT D'ENERGIE

(30) Priorität: 21.04.2006 DE 202006006638 U
(43) Veröffentlichungstag der Anmeldung: 07.01.2009
(73) Patentinhaber: igus GmbH, 51147 Köln (DE)
(72) Erfinder: HERMEY, Andreas, 53773 Hennef (DE)
(74) Vertreter: Lippert, Stachow & Partner
(86) Internationale Anmeldenummer: PCT/DE2007/000674
(87) Internationale Veröffentlichungsnummer: WO 2007/121713

(56) Entgegenhaltungen:
- WO-A-99/57457
- WO-A-2005/108820
- DE-U1-202006 006 638
- DE-U1-202006 006 645
- FR-A- 2 875 065
- FR-A3- 2 723 627

## Beschreibung

Die Erfindung betrifft eine Energieführungskette nach dem Oberbegriff von Anspruch 1.

Eine derartige Energieführungskette ist aus der FR 2 723 627 A3 bekannt. Die Kette schließt einen gewöhnlichen, zwischen den oberen und unteren Querstegen angeordneten Aufnahmebereich für Energieleitungen ein. Bezüglich dieses gewöhnlichen Aufnahmebereichs sind die Schwenkachsen der Kettenglieder, wie üblich, mittig angeordnet. Zur Aufnahme weiterer Aufnahmekörper für Energieleitungen, die ebenfalls als Energieführungsketten ausgebildet sein können, weisen die Seitenlaschen der Kette zum Schlaufenäußeren weisende Erweiterungen auf, zwischen denen die weiteren Aufnahmekörper beim Verfahren der Kette geführt sind. Die Kette ist nicht zum Aufgleiten des Obertrums auf den zum Schlaufeninneren weisenden Schmalseiten der Seitenlaschen des Untertrums ausgelegt.

Bei der aus der FR 2 875 065 A1 bekannten Energieführungskette sind die zum Schlaufeninneren weisenden Querstege an einer Seite einstückig mit den Seitenlaschen verbunden, wobei der Abstand der Schwenkachse zu der dem Schlaufeninneren zugewandten Schmalseite demjenigen zu der Schlaufenäußeren zugewandten Schmalseite dieser Seitenlaschen entspricht. An der anderen Seite sind die Querstege durch einen Spalt von der oberen Schmalseite der Seitenlaschen zum Einlegen der Kabel in die Energieführungskette beabstandet. Ein Gleiten des Obertrums auf dem Untertrum ist nur auf den Querstegen und dort aufgrund der Lücken zwischen den benachbarten Kettengliedern nur schwerlich möglich.

Die aus DE 197 15 531 A1, WO 99/57457 A1 oder DE 199 19 076 A1 bekannten Energieführungsketten weisen zwei sich gegenüberliegende Stränge von miteinander gelenkig verschwenkbar verbundenen Seitenlaschen auf, zwischen denen Querstege befestigt sind, die mit den Seitenlaschen den Innenraum der Kettenglieder begrenzen. Jeweils benachbarte Seitenlaschen überlappen sich im Bereich der gemeinsamen Schwenkachse. Die Seitenlaschen können beispielsweise als flache Innen- und Außenlaschen ausgebildet sein, wobei bei der Innenlasche die Überlappungsbereiche dem Inneren des Kettenglieds zugewandt und bei der Außenlasche von diesem abgewandt sind. In einer Seitenlasche kann auch je ein nach innen und nach außen gewandter Überlappungsbereich vorhanden sein, die durch eine Kröpfung verbunden sind. Bei den bekannten Energieführungsketten sind die Schwenkachsen mittig zwischen den Schmalseiten der Laschen angeordnet.

Beim Verfahren im Betrieb bilden die Energieführungsketten häufig eine Schlaufe, die aus einem Untertrum, einem darüber liegenden Obertrum und einem beide verbindenden Übergangsbereich besteht. Die Energieführungskette ist dabei fast ausschließlich gestreckt oder so gekrümmt, dass sie im Inneren der Schlaufe konkav ist. Die Gelenkverbindung zwischen benachbarten Seitenlaschen muß also hauptsächlich eine Verschwenkung aus der gestreckten Konfiguration in eine Richtung, d. h. entsprechend einer konkaven Krümmung, ermöglichen.

Aus WO 99/57457 A1 ist bekannt, die Seitenlaschen zumindest teilweise mit Laufrollen zu versehen, die das Gleiten des Obertrums auf dem Untertrum erleichtern und so die Reibung beim Verfahren der Energieführungskette vermindern. Die zur Innenseite der Schlaufe weisenden Schmalseiten der Seitenlaschen dienen dabei als Laufflächen für die Laufrollen. Gegebenenfalls muß diese Lauffläche auch im Überlappungsbereich die Breite des gesamten Laschenstrangs haben, damit die Rollen durchgehend auf der Lauffläche abrollen können. Dabei behindern sie das Verschwenken der Seitenlaschen gegeneinander und müssen verkürzt werden, wodurch insbesondere bei gestrecktem Laschenstrng Lücken entstehen, die zu ungleichmäßigem Lauf und Geräuschbildung führen.

Die Erfindung stellt sich daher die Aufgabe, eine Energieführungskette der beschriebenen Art anzugeben, bei der die dem jeweils gegenüberliegenden Trum zugewandten Schmalseite der Laschenstränge als möglichst durchgehende Fläche ausgebildet werden kann.

Diese Aufgabe wird durch eine Energieführungskette nach dem Hauptanspruch gelöst.

Es wurde nämlich gefunden, dass auch eine durchgehende Lauffläche das Verschwenken nicht behindert, wenn die Schwenkachse nicht mittig zwischen der Lauffläche und der gegenüberliegenden Schmalseite einer Seitenlasche liegt, sondern außermittig zur Lauffläche hin verschoben ist. Das Ausmaß dieser Verschiebung richtet sich nach dem maximal zu erreichenden Verschwenkwinkel, der im allgemeinen ohnehin durch Anschläge in den Seitenlaschen begrenzt wird. "Durchgehend" bedeutet in diesem Zusammenhang, dass der Spalt in der Lauffläche beim Übergang von einer Seitenlasche zur nächsten auf das unvermeidliche Spiel beschränkt ist.

Besonders vorteilhaft ist eine erfindungsgemäße Ausführungsform, bei der zumindest einige der Seitenlaschen mit Laufrollen versehen sind, die auf der Schmalseite des Laschenstrangs im gegenüberliegenden Trum abrollen können. Die durchgehende Lauffläche ermöglicht ein weitgehend energieverlustfreies und geräuscharmes Abrollen. Dagegen würden die bei mittiger Anordnung der Schwenkachse notwendigen Lücken nur einen holprigen und lauten Ablauf zulassen.

Die Anwendungsbreite der Erfindung ist jedoch nicht auf die Ausführung mit Laufrollen beschränkt. Man erkennt leicht, dass auch ohne Rollen eine durchgehende Schmalseite auf der Schlaufeninnenseite für das Gleiten des Obertrums auf dem Untertrum vorteilhaft ist, insbesondere dann, wenn dort beispielsweise in bekannter Weise Dämpfungs- oder Gleitkörper angebracht sind.

Bei einer besonders bevorzugten Ausführungsform sind Laufrollen vorhanden, deren Drehachsen mit einer Schwenkachse eines Seitenlaschenpaars zusammenfällt. Dies ermöglicht eine besonders kurze und einfache Bauweise der Seitenlaschen.

Die Erfindung wird nun anhand der beigegebenen Zeichnungen näher erläutert.
Figur 1 ist eine schematische Darstellung einer Seitenlasche nach dem Stand der Technik.
Figur 2 zeigt einen Ausschnitt aus einem Laschenstrang einer erfindungsgemäßen Energieführungskette mit vier Laschen in Seiten- und Draufsicht.
Figur 3 zeigt denselben Laschenstrang in perpektivischer Ansicht in gestreckter und in gebogener Konfiguration.

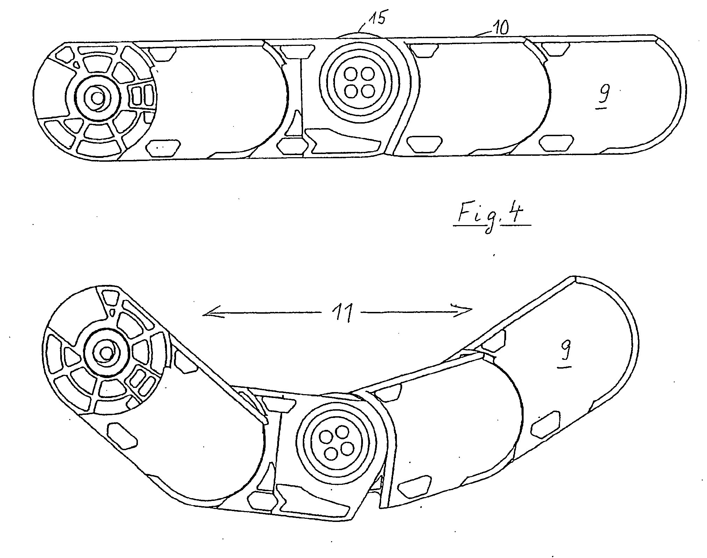

Figur 4 zeigt denselben Laschenstrang in Seitenansicht in gestreckter und in gebogener Konfiguration.

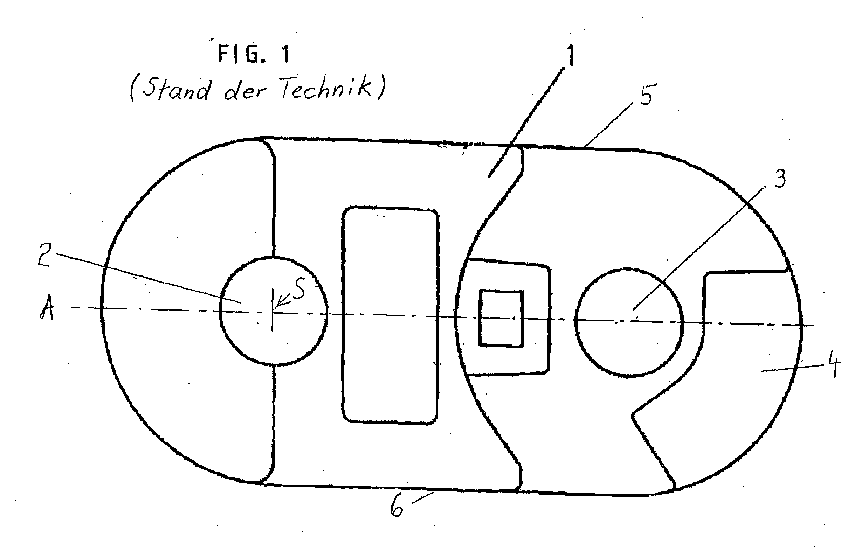

In Figur 1 weist die Seitenlasche 1 einen Gelenkzapfen 3 und eine Zapfenaufnahme 2 auf. Beim Zusammenfügen mit einer weiteren Seitenlasche wird der Zapfen 3 in die Aufnahme 2 eingeführt und die Seitenlaschen sind um die durch die (senkrecht zur Zeichnungseben) verlaufende Schwenkachse S verschwenkbar. Der Winkel der Verschwenkung ist durch den Anschlag 4 begrenzt. Die Lasche ist symmetrisch hinsichtlich der Achse A, d. h. dass die Schwenkachse S mittig zwischen den Schmalseiten 5 und 6 der Lasche verläuft.

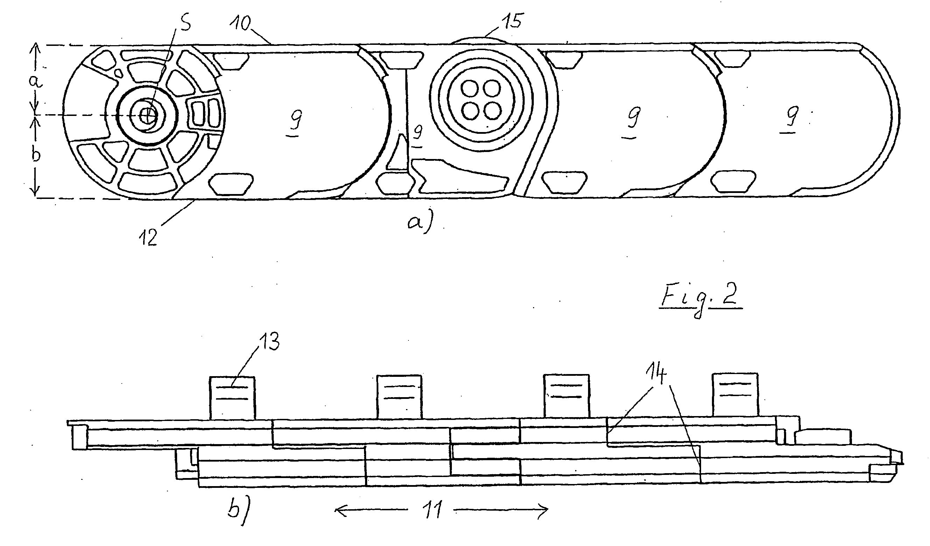

Figur 2 zeigt eine Seitenansicht a) und eine Draufsicht b) eines Ausschnitts aus einem Laschenstrang des Untertrums einer erfindungsgemäßen Energieführungskette mit vier Seitenlaschen in gestreckter Konfiguration. Die obere Schmalseite 10 der Seitenlaschen 9 bildet in dieser Konfiguration die durchgehende Lauffläche 11 mit vorzugsweise über die Länge gleichbleibender Breite. Die Spalte 14 zwischen den Laschen können so eng wie funktionsbedingt möglich sein, beispielsweise ≤ 1 - 5 mm. Die Schwenkachse S ist durch den dort befindlichen Gelenkzapfen definiert. Ihr Abstand a zur Lauffläche 10 ist kleiner als der Abstand b zur anderen Schmalseite 12. Die Zapfen 13 dienen der Verbindung mit den Querstegen. In einer der Seitenlaschen sind Laufrollen 15 eingebaut, die aus der Lauffläche etwas herausragen und auf dem gegenüberliegenden Trum abrollen können.

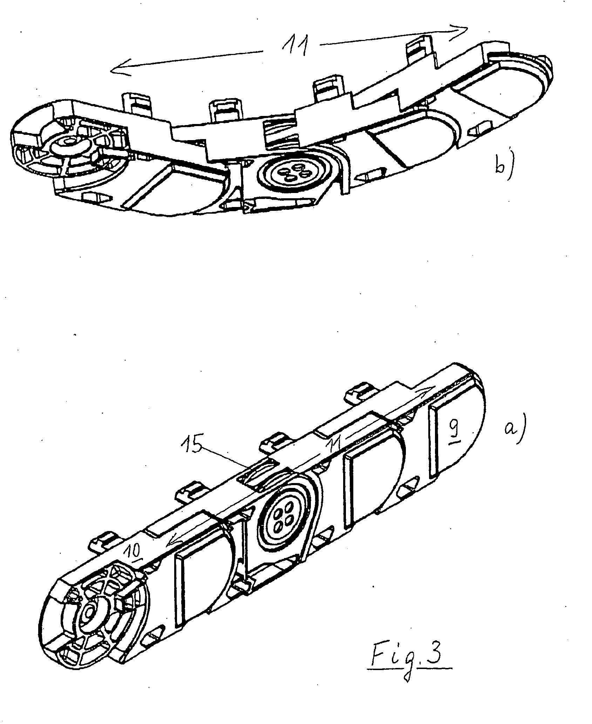

Figuren 3 und zeigen denselben Laschenstrangausschnitt in perspektivischer und in Seitenansicht in gestreckter Konfiguration a) und in gebogener Konfiguration b). Man sieht auch hier die durchgehende Lauffläche 11, die auch bei Krümmung nur kleine Lücken bildet.

### Energieführungskette

### Bezugzeichenliste

- 1: Seitenlasche
- 2: Zapfenaufnahme
- 3: Gelenkzapfen
- 4: Anschlag
- 5, 6: Schmalseite
- 9: Seitenlasche
- 10, 12: Schmalseite
- 11: Lauffläche
- 13: Zapfen für Quersteg
- 14: Spalt
- 15: Laufrolle
- A: Symmetrieachse
- S: Schwenkachse

## Patentansprüche

1. Energieführungskette zur Führung von Schläuchen, Kabeln und dergleichen mit einer Anzahl gelenkig miteinander verbundener Kettenglieder, die durch zueinander parallele Seitenlaschen (9) und diese verbindende Querstege gebildet werden, wobei die Energieführungskette so verfahrbar ist, dass sie eine Schlaufe aus einem Untertrum, einem Obertrum und einem diese verbindenden Umlenkbereich bildet, wobei die jeweils eine der Schmalseiten der (10, 12) Seitenlaschen (9) zum Inneren und die andere zum Äußeren der Schlaufe gerichtet ist und jeweils zwei einander benachbarte Seitenlaschen (9) um eine gemeinsame Schwenkachse (S) gegeneinander verschwenkbar sind, und wobei der Abstand der Schwenkachse (S) zu der dem Schlaufeninneren zugewandten Schmalseite (10) geringer als zu der dem Schlaufenäußeren zugewandten Schmalseite (12) ist, **dadurch gekennzeichnet, dass** die zur Innenseite der Schlaufe weisenden Schmalseiten (10) der Seitenlaschen (9) in gestreckter Konfiguration eine durchgehende Lauffläche (11) bilden, auf welcher das gegenüberliegende Trum gleiten oder, sofern bei der Energieführungskette zumindest einige der Seitenlaschen (9) des gegenüberliegenden Trums mit Laufrollen (15) versehen sind, abrollen kann.

2. Energieführungskette nach Anspruch 1, **dadurch gekennzeichnet, dass** an den zum Schlaufeninneren gewandten Schmalseiten (10) Laufrollen (15) vorhanden sind, die jeweils auf der Schmalseite (10) im gegenüberliegen Trum abrollen können.

3. Energieführungskette nach Anspruch 2, **dadurch gekennzeichnet, dass** die Drehachse jeder Laufrolle (15) mit der Schwenkachse (5) eines Seitenlaschenpaars zusammenfällt.

## Claims

1. Energy guiding chain for guiding hoses, cables and the like, with a number of chain links connected to each other in articulated fashion, which are formed by mutually parallel side straps (9) and cross-members connecting them, where the energy guiding chain can be traversed in such a way that it forms a loop consisting of a lower strand, an upper strand, and a deflection zone connecting them, where one of the narrow faces (10, 12) of the side straps (9) faces towards the inside of the loop, and the other to the outside of the loop, and two adjacent side straps (9) can be pivoted relative to each other about a common pivoting axis (S), and where the distance between the pivoting axis (S) and the narrow face (10) facing towards the inside of the loop is smaller than that between the pivoting axis (S) and the narrow face (10) facing towards the outside of the loop, **characterized in that** the narrow faces (10) of the side straps (9) facing towards the inside of the loop form a continuous running surface, in the stretched configuration, on which the opposite strand can slide or, provided that on the energy guiding chain at least some of the side straps (9) of the opposite strand are provided with rollers (15), can roll.

2. Energy guiding chain according to Claim 1, **characterized in that** rollers (15) are provided on the narrow faces (10) facing towards the inside of the loop and can roll on the narrow face (10) in the opposite strand.

3. Energy guiding chain according to Claim 2, **characterized in that** the axis of rotation of each roller (15) coincides with the pivoting axis (5) of a pair of side straps.

## Revendications

1. Chaîne d'acheminement d'énergie destinée à acheminer des tuyaux, des câbles etc. et comportant un nombre de chaînons articulés l'un à l'autre et formés par des pattes latéraux (9) parallèles l'une à l'autre et des traverses reliant lesdites pattes, ladite chaîne d'acheminement étant mobile de cette façon qu'elle forme un passant à partir d'un brin inférieur, d'un brin supérieur et d'une partie de changement de direction, l'un des côtés étroits (10, 12) des pattes latéraux (9) étant orientée vers l'intérieur et l'autre des côtés étroits étant orientée vers l'extérieur du passant et deux pattes latéraux adjacentes (9) pouvant être pivotées l'une par rapport à l'autre, et la distance de l'axe de pivotement (S) du côté étroit (10) orienté vers l'intérieur du passant étant inférieure à la distance de l'axe de pivotement du côté étroit (12) orienté vers l'extérieur du passant, la chaîne d'acheminement **caractérisée en ce que** les côtés étroits (10) des pattes latéraux (9) orientés vers l'intérieur du passant forment, en une configuration étendue, une surface de roulement continue (11), sur laquelle peut glisser la partie opposée ou peut rouler, pourvu que dans la chaîne d'acheminement d'énergie quelques au moins des pattes latéraux (9) de la partie opposée sont munies des galets.

2. Chaîne d'acheminement d'énergie selon la revendication 1, **caractérisée en ce que** sur les côtés étroits (10) orientés vers l'intérieur du passant sont prévues des galets (15) qui peuvent rouler chacun sur le côté étroit (10) dans le brin opposé.

3. Chaîne d'acheminement d'énergie selon la revendication 2, **caractérisée en ce que** l'axe de rotation de chacun des galets (15) coïncide avec l'axe de pivotement (5) d'un couple de pattes latéraux.
